# EUROPEAN PATENT APPLICATION

(11) **EP 1 313 004 A1**
(43) Date of publication of application: **21.05.2003**
(21) Application number: 01934444.9
(22) Date of filing: 30.05.2001
(51) Int. Cl.: G06F 3/12, B41J 5/30, H04N 1/21

(54) **PORTABLE STORING MEDIUM AND ITS RECORDER**

(30) Priority: 14.06.2000 JP 2000178929
(71) Applicant: MATSUSHITA ELECTRIC INDUSTRIAL CO., LTD., Kadoma-shi, Osaka 571-8501 (JP)
(72) Inventor: MURATA, Kazuyuki, Kyotanabe-shi, Kyoto 610-0352 (JP)
(74) Representative: Tothill, John Paul
(86) International application number: JP0104581
(87) International publication number: WO01097005

(57) **Abstract**

A portable storage medium and a recording apparatus for the same that are capable of offline inputting and outputting image and text data automatically and efficiently to a digital copying machine, a scanner, a printer, a facsimile, a mobile phone, a liquid crystal projector, a television set and the like are provided. In the portable storage medium, a plurality of data files and one job file are stored, where a plurality of job information for executing each of predetermined procedures with respect to each of a designated plurality of data files from the plurality of data files are integrated. In this portable storage medium, the job file includes a plurality of job information blocks, each of which is specified to have a fixed size, for storing the plurality of job information, and each of the plurality of job information blocks includes discrimination information for used job information blocks to indicate whether the job information block is used or not.

## Description

### TECHNICAL FIELD

The present invention relates to a technology that is applied to a digital copying machine, an image reader (scanner), an image formation apparatus (printer), a facsimile, a mobile phone, a liquid crystal projector, a television set and the like and for recording image and text data together with predetermined information on the management and the processing of these data onto a removable and portable storage medium, whereby offline inputting and outputting of the image and the text data automatically and are carried out efficiently.

### BACKGROUND ART

Recently, the demand for high speed and multi-functional digital copying machines has arisen, and a so-called digital copying machine provided with a facsimile function, a printer function, etc. in addition to a copy function has been developed. A conventional digital copying machine will be described below, referring to the drawings.

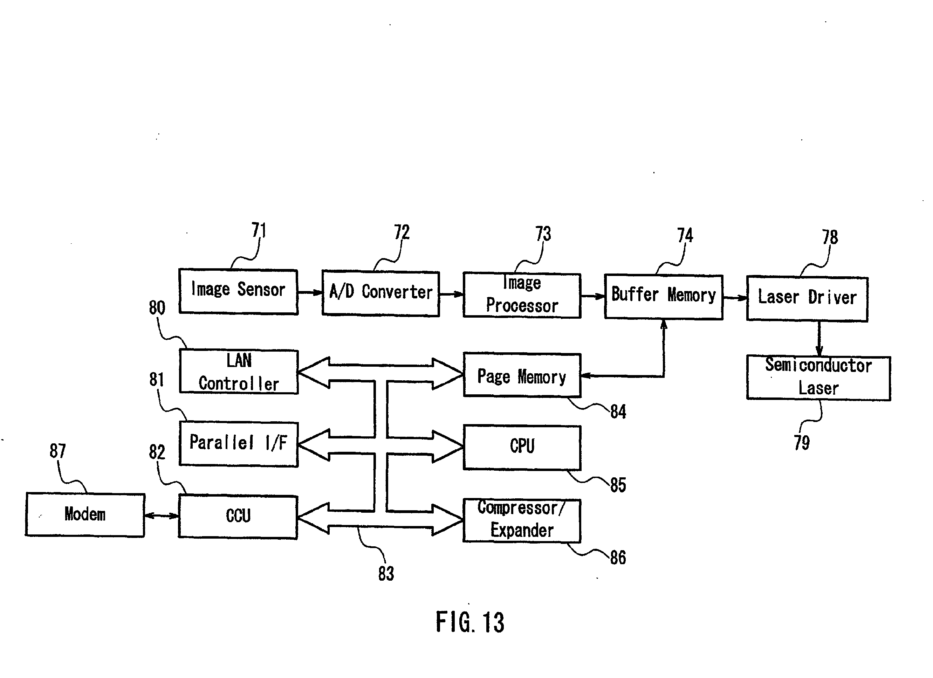

Fig. 13 is a block diagram showing the flow of an image signal in a conventional digital copying machine.

As shown in Fig. 13, an image sensor 71 scans an original to convert reflected light from the original to an electric signal. An analog image signal from the image sensor 71 then is converted to a digital image signal by an analog-to-digital (A/D) converter 72. The converted digital image signal is subjected to image processing such as edge enhancement, trimming, and halftone processing, and edit processing in an image processor 73. An image signal output from the image processor 73 is buffered in buffer memory 74 for speed control to be given to a laser driver 78. The laser driver 78 drives a semiconductor laser 79 to form an electrostatic latent image by laser beams output from the semiconductor laser 79.

The digital copying machine further includes a central processing unit (CPU) 85, a local area network (LAN) controller 80, page memory 84, a parallel interface (I/F) 81, a communication control unit (CCU) 82, and a compressor/expander 86, which are mutually connected by a CPU bus 83.

The CPU 85 includes random access memory (RAM) and read only memory (ROM) and controls the entire digital copying machine. The page memory 84 has a capacity that can store at least one page of image data and is connected to the buffer memory 74. Image data stored in the page memory 84 is output to the laser driver 78 through the buffer memory 74 to be printed on paper.

The LAN controller 80 communicates with external equipment through a local area network (LAN). When the digital copying machine is used as a remote printer, external equipment such as a computer transmits a print control command and image data to the digital copying machine through the LAN. The CPU 85 stores the image data received through the LAN into the page memory according to the received print control command.

Using the parallel I/F 81, the digital copying machine and an external apparatus can be connected one to one. When the digital copying machine is used as a printer for the external apparatus, the external apparatus transmits a print control command and image data to the digital copying machine through the parallel I/F 81 of the digital copying machine. When the image scanner function of the digital copying machine is used by the external apparatus, the external apparatus transmits an image read control command to the digital copying machine through the parallel I/F 81, and read original image data is transmitted to the external apparatus from the digital copying machine.

The CCU 82 communicates with an external facsimile through a public network using a modem 87. Image data received by the facsimile is expanded by the compressor/expander 86, is transferred to the page memory 84, and is printed out. Also, original image data read for facsimile transmission is stored in the page memory 84, is compressed by the compressor/expander 86, and is transmitted to the external facsimile through the CCU 82 and the modem 87.

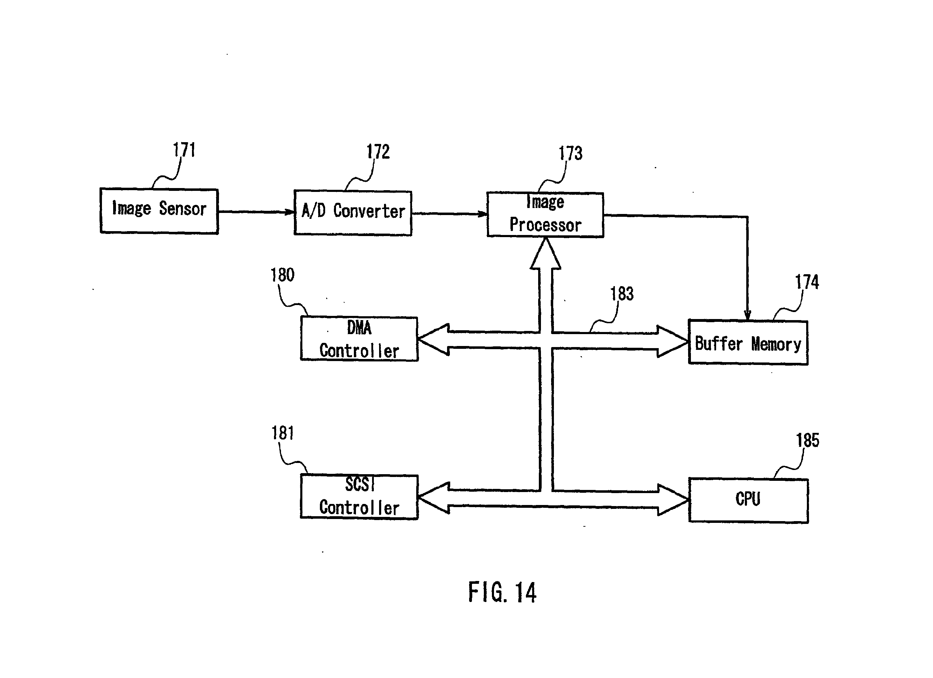

Next, a conventional image reader will be described. Fig. 14 is a block diagram showing the flow of an image signal in a conventional image reader.

In Fig. 14, an image sensor 171 scans an original to convert reflected light from the original to an electric signal. An analog image signal output from the image sensor 171 is converted to a digital image signal by an A/D converter 172, and is input to an image processor 173. With respect to the digital image signal, the image processor 173 performs image processing such as edge enhancement, trimming, halftone processing, pixel density conversion, and gradation level conversion as well as edit processing. Image data output from the image processor 173 is buffered in buffer memory 174.

For controlling the entire image reader, a CPU 185 provided with RAM and ROM is provided. The CPU 185, the image processor 173, the buffer memory 174, a DMA (direct memory access) controller 180, and a small computer system interface (SCSI) controller 181 are mutually connected through a CPU bus 183.

The DMA controller 180 DMA transfers image data stored in the buffer memory 174 to the SCSI controller 181. External equipment such as a computer transmits a control command for the image reader to the image reader through the SCSI controller 180 and receives image data from the image reader. The CPU 185 sets the degree of edge enhancement, the gradation level of image data, read density, etc. according to the image read control command.

Generally, a high-speed digital plain paper copier (PPC) capable of copying more than tens of sheets per minute is located in a common space such as a copy room or a hallway. When copying a document that is prepared by a personal computer, etc. in plural copies, a user has to print an original by a nearby printer, take the original to a place where a digital copying machine is located, and then copy the original in plural copies using a sorter, etc. of the digital copying machine. Especially when a personal computer used by a user is not connected through a LAN, the remote print function of the digital copying machine cannot be used, so that copying must be done as mentioned above. In this case, an original image is once printed on paper before copying it, and therefore the image is inevitably degraded.

When a personal computer used by a user is connected to the digital copying machine through a LAN, the user can use the remote print function of the digital copying machine. Therefore, the user directly can utilize a function such as a sorter of the digital copying machine from his/her personal computer. However, when copying by using the remote print function of the digital copying machine, the user has to go to a distant place where the digital copying machine is located to take printed paper. Also, when copying in large amounts using the remote print function, problems such as paper-out and paper jam are likely to occur. To solve these troubles, the user also has to go to the place where the digital copying machine is located. Thus, it can be said that the utility value of the remote (online) print function in a high-speed digital copying machine is not very high.

When using the image scanner function of the digital copying machine from a user's personal computer online by using the parallel I/F 81 shown in Fig. 13 and the LAN, similar problems arise. That is, the user has to go to a distant place where the digital copying machine is located to set an original in the image scanner part of the digital copying machine. Therefore, when the digital copying machine and the user's computer are located a distance apart, it is not useful to use the image scanner function of the digital copying machine online.

Such an image reader is connected to external equipment such as a personal computer one to one using an interface such as a SCSI. Therefore, the image reader is used exclusively by the user of the connected personal computer. When another user attempts to use the image reader, the user has to use the personal computer connected to the image reader or reconnect the image reader to his/her personal computer.

When a user carries his/her personal computer to a place such as a business destination and attempts to print a document, it is troublesome to connect the personal computer through a LAN at the business destination. In some cases, on the ground of security, a user's carried personal computer may not be connected to a LAN at a business destination. If a printer and a scanner at a business destination and at a convenience store are equipped with an offline function, data to be printed can be printed easily and data on a paper document can be converted into electronic form easily through a memory card.

### DISCLOSURE OF THE INVENTION

With the foregoing in mind, it is an object of the present invention to provide a portable storage medium and a recording apparatus for the same that are easily applicable to a digital copying machine, an image reader (scanner), an image formation apparatus (printer), a facsimile, a mobile phone, a liquid crystal projector, a television set and the like and for recording image and text data together with predetermined information on the management and the processing of these data onto a removable and portable storage medium, whereby it is possible to carry out offline inputting and outputting of the image and the text data automatically and efficiently.

It is another object of the present invention to realize an offline printing function by storing e-mail data and a text file received by a mobile phone into a portable storage medium capable of being installed into the mobile phone, and then by inserting this portable storage medium into equipment having a printing function such as a facsimile and a printer.

It is still another object of the present invention to realize an offline printing function by storing data contained in data broadcasting that is transmitted to a TV set capable of receiving the data broadcasting into a portable storage medium capable of being installed into the TV set, and then by inserting this portable storage medium into equipment having a printing function such as a facsimile and a printer.

It is a further object of the present invention to give a presentation without using a computer by storing slide image data produced using a computer into a portable storage medium, and then by inserting this portable storage medium into equipment having a display function such as a liquid crystal projector.

In order to fulfill the above-stated objects, a first portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks, each of which is specified to have a fixed size, for storing the plurality of job information, and each of the plurality of job information blocks includes discrimination information for used job information blocks to indicate whether the job information block is used or not.

According to this first portable storage medium, a plurality of job information on object data files can be managed as one file, so that a plurality of jobs such as print and display can be executed optimally. In addition, when adding a job, an unused job information block for storing job information for the job can be retrieved easily.

In the above-stated first portable storage medium, it is preferable that each of the plurality of job information blocks includes pointer information on a next used job information block and pointer information on a previous used job information block.

With this configuration, when adding a job, an unused job information block for storing job information corresponding to the job to be added can be retrieved promptly in accordance with a list connection relationship between the previous used job information block and the next used job information block, and a new list connection relationship between the unused job information block and used job information blocks prior to and subsequent to the unused job information block is created so as to have a bi-directional list configuration. In addition, when deleting a job, after a used information block in which job information corresponding to the job is stored is made unused, a new list connection relationship with used job information blocks prior to and subsequent to the job information block is created. With this bi-directional list configuration, addition and deletion of a job in particular can be conducted easily.

In addition, in the above-stated first portable storage medium, the job file includes a header, and the header at least includes: the number of the job information blocks that exist in the job file; the number of the job information blocks that are used or unused; and pointer information on a firstly used job information block.

With this configuration, especially when adding a job, the number of job information blocks existing in the job file and the number of used job information blocks are compared. When the comparison reveals that an unused job information block exists, the unused job information block can be retrieved easily by referring to the pointer information on the firstly used job information block (the first used block number). Alternatively, when the above comparison reveals that an unused job information block does not exit, then it can be judged easily that a job information block should be added.

In order to fulfill the above-stated objects, a second portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes job erase information that indicates whether or not to delete the job information after a predetermined procedure with respect to the data file as an object of the job information has been executed normally.

This second portable storage medium can eliminate a job being executed every time, when inserting the portable storage medium into reproducing equipment.

In order to fulfill the above-stated objects, a third portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes job/data erase information that indicates, after a predetermined procedure with respect to the data file as an object of the job information has been executed normally, whether or not to delete both the job information and the data file as the object of the job information.

This third portable storage medium can realize a spooling function for temporarily creating a data file for a job, such as a print spooling function.

In order to fulfill the above-stated objects, a fourth portable storage medium according to the present invention is a portable storage medium is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes version information concerning a format of the job information.

According to this fourth portable storage medium, even in the case where a version of a format of job information is upgraded, compatibility can be ensured easily.

In order to fulfill the above-stated objects, a fifth portable storage medium according to the present invention is a portable storage medium is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes a file number of the data file as an object of the job information.

According to this fifth portable storage medium, a name of an object file can be generated easily.

In order to fulfill the above-stated objects, a sixth portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes character code class information on text data that is used in the job information block.

This sixth portable storage medium becomes applicable to the case where a character code used in the job information and a character code used in the data files are different from each other.

In order to fulfill the above-stated objects, a seventh portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes job type information that indicates a job type of at least display and print.

According to this seventh portable storage medium, printing equipment and display equipment can be made job execution equipment.

In order to fulfill the above-stated objects, an eighth portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The job file includes a plurality of job information blocks for storing the plurality of job information, and each of the plurality of job information blocks includes continuation print information that indicates whether or not to print data as an object of a current print job, which is designated by job type information, continuously on a printed sheet on which data as an object of a previous print job, which is designated by job type information, has been printed. In this case, the data as the object of the print job is text data.

According to this eighth portable storage medium, when printing a relatively small amount of text data such as e-mail on a printed sheet according to the printing job, on one sheet on which text data has been printed according to the previous print job, another text data can be printed continuously according to the next print job, so that printed sheets can be saved.

In order to fulfill the above-stated objects, a ninth portable storage medium according to the present invention is a portable storage medium in which a plurality of data files and one job file are stored, where a plurality of job information for executing each of predetermined procedures with respect to each of a designated plurality of data files from the plurality of data files are integrated to the job file. The portable storage medium includes a plurality of directories in which a plurality of data files that are different in type are classified according to their data file types and stored.

In this ninth portable storage medium, it is preferable that the data files are files containing printable data. In addition, it is preferable that the data files contain at least two types of image data and text data.

In order to fulfill the above-stated objects, a tenth portable storage medium according to the present invention is a portable storage medium in which a plurality of data files and one manager file are stored, where a plurality of management information corresponding to each of the plurality of data files are integrated to the manager file. The plurality of data files at least include a plurality of image data files and a plurality of text data files, and the plurality of management information include: a plurality of image management information, each of which corresponds to each of the plurality of image data files; and a plurality of text management information, each of which corresponds to each of the plurality of text data files, and the manager file includes: an image manager file in which the plurality of image management information are integrated as one file and stored; and a text manager file in which the plurality of text management information are integrated as one file and stored.

According to this tenth portable storage medium, a plurality of management information corresponding to a plurality of data files can be managed as one file, so that a plurality of data files can be stored and deleted easily. In addition, optimal file management suitable for a format of inputted data can be conducted.

In order to fulfill the above-stated objects, an eleventh portable storage medium according to the present invention is a portable storage medium in which a plurality of data files and one manager file are stored, where a plurality of management information corresponding to each of the plurality of data files are integrated to the manager file. The manager file includes a plurality of management information blocks, each of which is specified to have a fixed size, for storing the plurality of management information that correspond to each of the plurality of data files, and each of the plurality of management information blocks includes discrimination information for used management information blocks to indicate whether the management information block is used or not, which corresponds to whether a region for storing a data file as an object of management is used or not.

According to this eleventh portable storage medium, when adding a data file, an unused management information block for storing management information on the data file can be retrieved easily.

In the above-stated eleventh portable storage medium, it is preferable that the plurality of data files at least include a plurality of image data files and a plurality of text data files, and the plurality of management information include: a plurality of image management information, each of which corresponds to each of the plurality of image data files; and a plurality of text management information, each of which corresponds to each of the plurality of text data files, and the manager file includes: an image manager file in which the plurality of image management information are integrated as one file and stored; and a text manager file in which the plurality of text management information are integrated as one file and stored.

With this configuration, optimal file management suitable for a format of inputted data can be conducted.

In addition, in the above-stated eleventh portable storage medium, it is preferable that each of the plurality of management information blocks includes pointer information on a next used management information block and pointer information on a previous used management information block.

With this configuration, when adding a data file, an unused management information block for storing management information corresponding to the data file to be added can be retrieved promptly in accordance with a list connection relationship between the previous used management information block and the next used management information block, and a new list connection relationship between the unused management information block and used management information blocks prior to and subsequent to the unused management information block is created so as to have a bi-directional list configuration. In addition, when deleting a data file, after a used management information block in which management information corresponding to the data file to be deleted is stored is made unused, then a new list connection relationship with used management information blocks prior to and subsequent to the management information block is created. With this bi-directional list configuration, addition and deletion of management information can be conducted easily.

In addition, in the above-stated eleventh portable storage medium, it is preferable that the manager file includes a header, and the header at least includes: the number of the management information blocks that exist in the manager file; the number of the management information blocks that are used or unused; and pointer information on a firstly used management information block.

With this configuration, especially when adding a data file, the number of management information blocks existing in the manager file and the number of used management information blocks are compared. When the comparison reveals that an unused management information block exists, the unused management information block can be retrieved easily by referring to the pointer information on the firstly used management information block (the first used block number). Alternatively, when the above comparison reveals that an unused management information block does not exit, then it can be judged easily that a management information block should be added.

In order to fulfill the above-stated objects, a twelfth portable storage medium according to the present invention is a portable storage medium in which a plurality of data files and one manager file are stored, where a plurality of management information corresponding to each of the plurality of data files are integrated to the manager file. The manager file includes a plurality of management information blocks for storing the plurality of management information that correspond to each of the plurality of data files, and each of the plurality of management information blocks includes version information on a format of the management information.

According to this twelfth portable storage medium, even in the case where a version of a format of management information is upgraded, compatibility can be ensured easily.

In order to fulfill the above-stated objects, a thirteenth portable storage medium according to the present invention is a portable storage medium in which a plurality of data files and one manager file are stored, where a plurality of management information corresponding to each of the plurality of data files are integrated to the manager file. The manager file includes a plurality of management information blocks for storing the plurality of management information that correspond to each of the plurality of data files, and each of the plurality of management information blocks includes a file number of the data file as an object of the management information.

According to this thirteenth storage medium, a name of an object file can be generated easily.

In order to fulfill the above-stated objects, a fourteenth portable storage medium according to the present invention is a portable storage medium in which a plurality of data files and one manager file are stored, where a plurality of management information corresponding to each of the plurality of data files are integrated to the manager file. The manager file includes a plurality of management information blocks for storing the plurality of management information that correspond to each of the plurality of data files, and each of the plurality of management information blocks includes a first character code class information on text data used in the data files and a second character code class information on text data used in the management information.

This fourteenth portable storage medium becomes applicable to the case where a character code used in the management information and a character code used in the data files are different from each other.

In order to fulfill the above-stated objects, a fifteenth portable storage medium according to the present invention is a portable storage medium in which a plurality of data files and one manager file are stored, where a plurality of management information corresponding to each of the plurality of data files are integrated to the manager file. The data files are multi-page image data files, and the manager file includes a plurality of image management information blocks for storing the plurality of image management information that correspond to each of the plurality of image data files, and each of the plurality of image management information blocks includes discrimination information for encoding method indicating encoding methods for all image data, which are used in the multi-page image data file as an object of the management information.

This fifteenth portable storage medium allows an encoding method used in the data files to be found instantaneously by checking the discrimination information for encoding method at the side of equipment that handles the data files. Therefore, the equipment that handles the data files can judge easily whether the data files can be reproduced or not.

In order to fulfill the above-stated objects, a sixteenth portable storage medium according to the present invention is a portable storage medium in which a plurality of data files and one manager file are stored, where a plurality of management information corresponding to each of the plurality of data files are integrated to the manager file. The data files are multi-page image data files, and the manager file includes a plurality of image management information blocks for storing the plurality of image management information that correspond to each of the plurality of image data files, and each of the plurality of image management information blocks includes discrimination information for color space indicating color spaces for all image data, which are used in the multi-page image data file as an object of the management information.

This sixteenth portable storage medium allows color space used in the data files to be found instantaneously by checking the discrimination information for color space at the side of equipment that handles the data files. Therefore, the equipment that handles the data files can judge easily whether the data files can be reproduced or not.

It is preferable that the above first to sixteenth portable storage media are a memory card.

In order to fulfill the above-stated objects, a first recording apparatus for the portable storage medium according to the present invention includes means for recording the data files and the corresponding job information on the above first to ninth portable storage media.

In order to fulfill the above-stated objects, a second recording apparatus for the portable storage medium according to the present invention includes means for recording the data files and the corresponding management information on the above tenth to sixteenth portable storage media.

### BRIEF DESCRIPTION OF DRAWINGS

Fig. 1 is a cross-sectional view showing a configuration of a digital copying machine, to which a portable storage medium and a recording apparatus for the same according to one embodiment of the present invention are applied.
Fig. 2 is a block diagram showing the flow of a signal in the digital copying machine shown in Fig. 1.
Fig. 3 shows configurations of directories and files, in which data are recorded, in the portable storage medium according to one embodiment of the present invention.
Fig. 4 shows a file configuration of the text manager file DOCUMENT. PTM shown in Fig. 3.
Fig. 5A schematically shows a text manager file and an object text file before adding a text data file.
Fig. 5B schematically shows a text manager file and an object text file after adding a text data file.
Fig. 6 shows a file configuration of the multi-page image manager file DOCUMENT. RIM shown in Fig. 3.
Fig. 7 shows a file configuration of the job file DOCUMENT. JOB shown in Fig. 3.
Fig. 8 shows a configuration of a system including a side equipped with a memory card writer and a side equipped with a memory card reader according to one embodiment of the present invention.
Fig. 9 shows an example of a screen for a user to select an offline printer.
Fig. 10 shows an example of a dialog box for a user to set properties of an offline printer.
Fig. 11 shows a screen for a user to select an offline projector.
Fig. 12 shows an example of a dialog box for a user to set properties of an offline projector.
Fig. 13 is a block diagram showing the flow of a signal in a conventional digital copying machine.
Fig. 14 is a block diagram showing the flow of a signal in a conventional image reader.

### BEST MODE FOR CARRYING OUT THE INVENTION

The following specifically describes a digital copying machine to which a portable storage medium and a recording apparatus for the same according to one embodiment of the present invention are applied, with reference to the drawings.

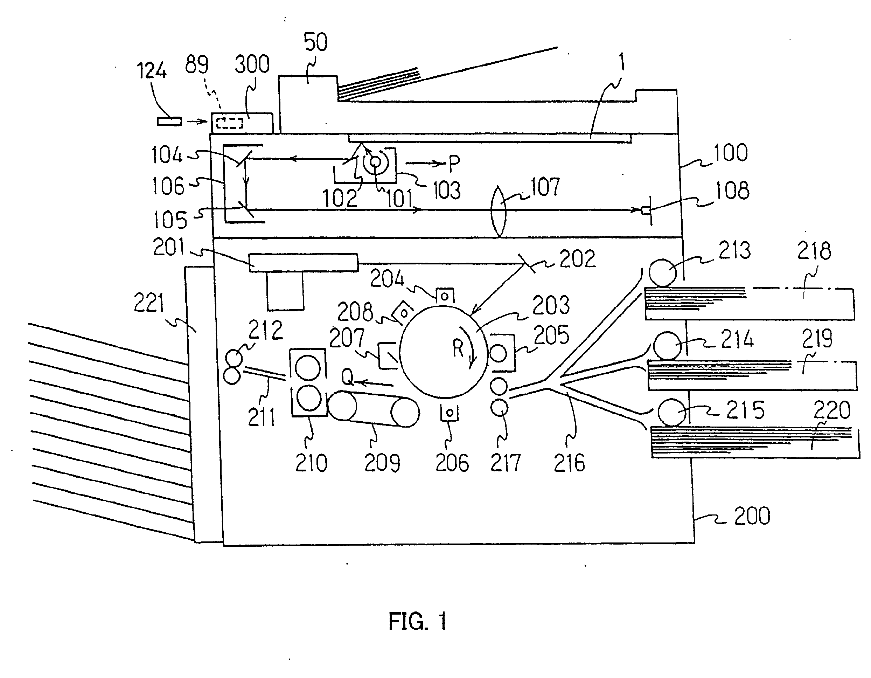

Fig. 1 is a cross-sectional view schematically showing the internal structure of a digital copying machine of this embodiment. This digital copying machine includes an auto document feeder (ADF) 50 provided on a document platen 1, an image scanner section 100 provided beneath the document platen 1, a laser printer section 200 provided independently beneath the image scanner section 100, and an operation section 300 provided at the side of the document platen 1. The operation section 300 is provided with a memory card slot 89 into which a memory card 124 functioning as a portable storage medium is inserted.

The image scanner section 100 includes an exposure lamp 101, a first mirror 102, a constant-speed unit 103, a second mirror 104, a third mirror 105, a half-speed unit 106, a lens 107 and an image sensor 108.

The laser printer section 200 includes a laser scanner unit 201, a mirror 202, a photoconductor drum 203, a main charging device 204, a developing device 205, a transfer charging device 206, a cleaner 207, a discharging lamp 208, a carrier belt 209, a fixing device 210, a guide 211, a paper ejection roller 212, paper feed rollers 213, 214 and 215, a guide 216, a timing roller 217, paper cassettes 218, 219 and 220, and a sorter 221. The laser scanner unit 201 includes a semiconductor laser, a polygonal motor, a polygonal mirror, and a laser optic system.

The basic operation of this digital copying machine will be described below.

A plurality of originals put on the ADF 50 are set downward on the document platen 1, which is a transparent glass plate, one by one by the ADF. When the exposure lamp 101 exposes an original, reflected light from the original is reflected toward the second mirror 104 by the first mirror 102. The constant-speed unit 103 including the exposure lamp 101 and the first mirror 102 moves in the direction of an arrow P at a constant speed to scan the original. The half-speed unit 106 including the second mirror 104 and the third mirror 105 further reflects the reflected light from the first mirror 102 and moves in the same direction as that of the constant-speed unit 103 at half the speed of the constant-speed unit 103. The reflected light from the original through the half-speed unit 106 is focused by the lens 107 on the image sensor 108.

The photoconductor drum 203 rotates in the direction of arrow R at a constant speed. The main charging device 204 charges the photoconductor drum 203 uniformly. Alaser beam from the laser scanner unit 201 is reflected by the mirror 202 to form an electrostatic latent image on the photoconductor drum 203. The developing device 205 develops the electrostatic latent image using a toner to form a toner image on the photoconductor drum 203.

The cassettes 218, 219 and 220 are removable, and plural types of paper having different combinations of paper sizes and orientations are held in respective cassettes. The paper feed rollers 213, 214 and 215 feed sheets of paper in the cassettes one by one. The guide 216 guides the fed paper to the timing roller 217. The timing roller 217 controls paper feed timing so that the fed paper is in register with the toner image on the photoconductor drum 203. The toner image on the photoconductor drum 203 is transferred onto the paper by the electric field generated by the transfer charging device 206. The carrier belt 209 moves in the direction of an arrow Q to carry the paper to the fixing device 210. The fixing device 210 fixes the toner on the paper by heat.

The paper output from the fixing device 210 is guided to the sorter 221 through the guide 211 and the paper ejection roller 212. The sorter 221 includes a plurality of paper ejection trays (bins) and performs sorting in copying for each copy. Furthermore, the sorter 221 includes a staple function and a punch function. The cleaner 207 removes any residual toner on the photoconductor drum 203. The discharging lamp 208 exposes the photoconductor drum 203 to eliminate the electric charge on the photoconductor.

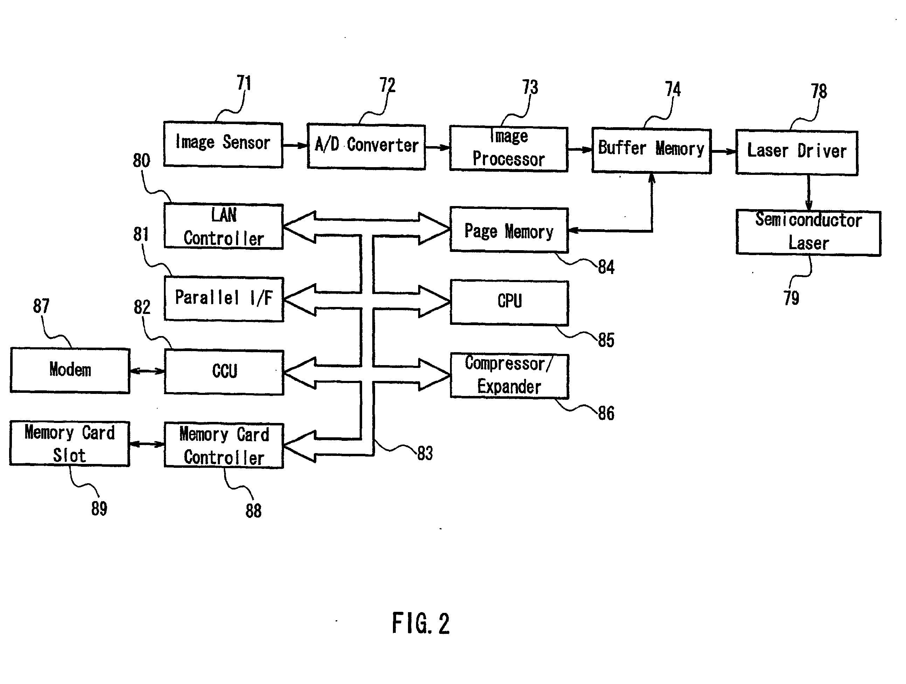

Next, a flow of signals in the digital copying machine of this embodiment will be described, referring to a block diagram of Fig. 2.

In Fig. 2, reflected light from an original obtained by scanning the original is converted to an electric signal by an image sensor 71, and then is converted to a digital image signal by an A/D converter 72. This digital image signal is subjected to image processing such as edge enhancement, trimming, and halftone processing, and edit processing in an image processor 73. An image signal from the image processor 73 is buffered in buffer memory 74 for controlling a speed to be output to a laser driver 78. The laser driver 78 drives a semiconductor laser 79, and an electrostatic latent image is formed on the drum by a laser beam from the semiconductor laser 79.

The buffer memory 74 is connected to page memory 84. The page memory 84, a CPU 85, a LAN controller 80, a parallel I/F 81, a communication control unit (CCU) 82, a compressor/expander 86, and a memory card controller 88 are mutually connected by a CPU bus 83.

The CPU 85 includes RAM and ROM and controls the entire digital copying machine. The page memory 84 has a capacity that can store at least one page of image data. Image data stored in the page memory 84 is output to the laser driver 78 through the buffer memory 74 to be printed on paper.

The LAN controller 80 communicates with external equipment through a local area network (LAN). When the digital copying machine is used as a facsimile transmission server, external equipment such as a computer transmits the telephone number of a transmit destination and image data to the digital copying machine through the LAN. The CPU 85 controls the compressor/expander 86 to compress the image data received from the external equipment through the LAN as required.

The CCU 82 transmits the image data MH compressed by the compressor/expander 86 to an external facsimile through a public network using a modem 87.

Also, using the parallel I/F 81, the digital copying machine and external equipment can be connected one to one. In this case, the digital copying machine can be controlled from a nearby computer. By executing dedicated software for controlling a digital copying machine on a computer connected to the digital copying machine, a copy mode such as the numbers of pages and copies, a paper size, copy density, a magnification rate, both side copying, and a sorting method can be set. Also, complicated edit setting such as the setting of frame erasure or a trimming area, or the setting of the reversal and its area can be done using the display and the mouse of the computer.

Image data received by facsimile is expanded by the compressor/expander 86, is transferred to the page memory 84, and is printed out. Original image data read for facsimile transmission is stored in the page memory 84, then is compressed by the compressor/expander 86, and is transmitted to an external facsimile through the CCU 82 and the modem 87.

The memory card controller 88 (recording apparatus for portable storage medium) controls an access from the CPU 85 to the memory card 124 installed in a memory card slot 89. If a job file storing print job information and a data file to be printed exist in the memory card 124 installed into the memory card slot 89, this digital copying machine prints data in the data file to be printed according to the contents of the job file. In this case, the digital copying machine functions as an offline printer.

Note here that although the above case describes the digital copying machine equipped with the memory card slot 89, the present invention is applicable to a display apparatus equipped with a memory card slot, e.g., a liquid crystal projector. In such a case, if a job file storing display job information and a data file to be displayed exist in the memory card 124 installed into the memory card slot, this liquid crystal projector displays data in the data file to be displayed according to the contents of the job file. In this case, the liquid crystal projector functions as an offline display.

Specific functions according to the job file in an output apparatus such as the above-stated offline printer and offline display will be described later in detail.

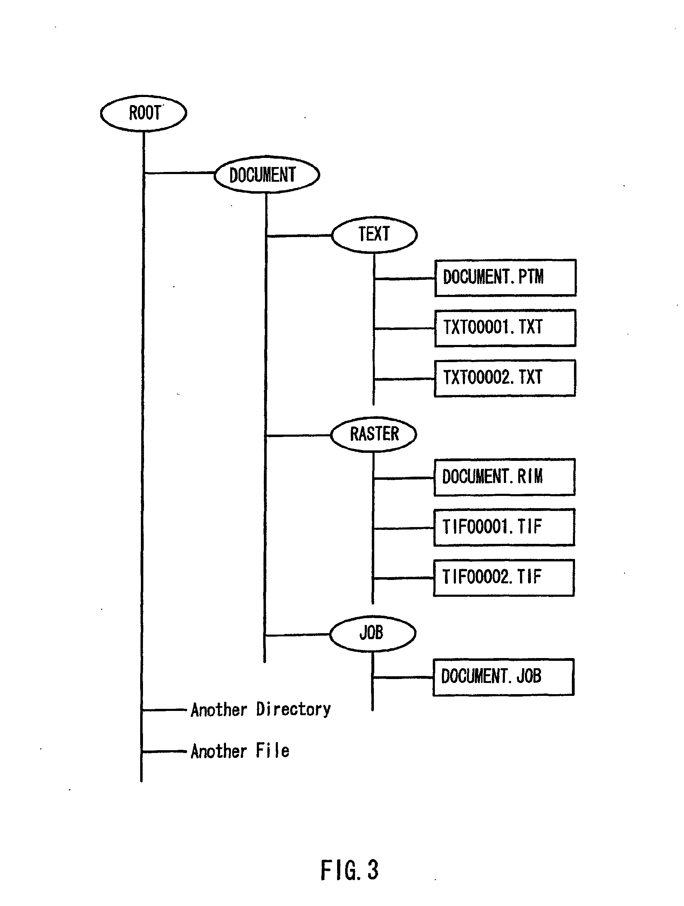

The following describes a configuration of a file stored in the memory card 124 according to this embodiment, with reference to Figs. 3 to 7.

Fig. 3 shows directories and file configurations of data recorded in the memory card 124.

In Fig. 3, there is a directory DOCUMENT under a root directory (ROOT), under which all of the files according to this embodiment are located. Under the directory DOCUMENT, a directory for text data files (TEXT), a directory for multi-page image data files (RASTER) and a directory for job files (JOB) are located.

The directory for text data files (TEXT) includes a plurality of text data files TXT00001.TXT, TXT00002.TXT, etc., and one text manager file DOCUMENT. PTM (Plain Text Manager) for managing each of the text data files. Note here that the numerical portion of the data file names indicates a file number.

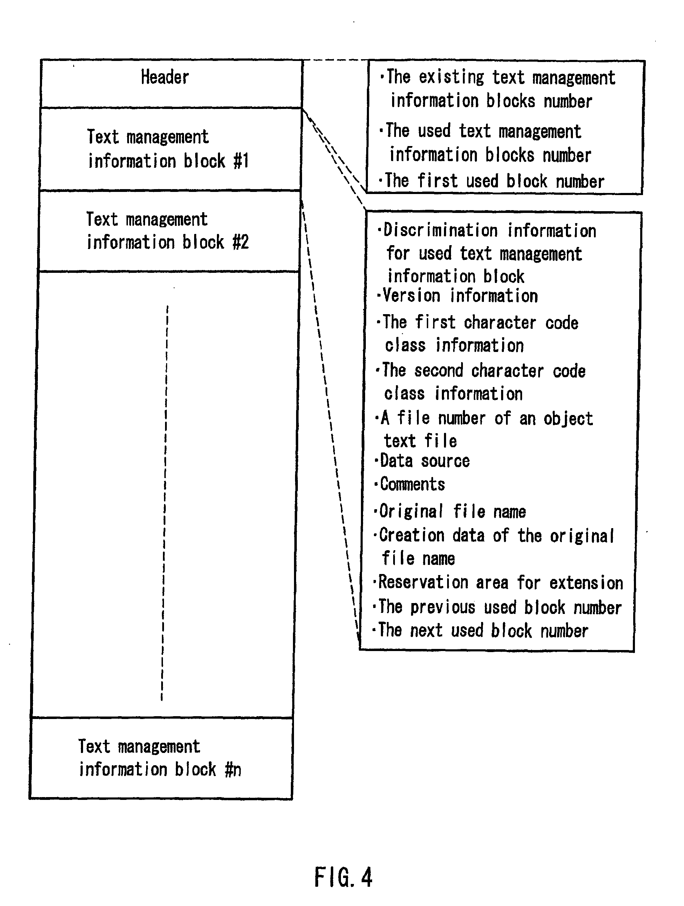

Fig. 4 shows a file configuration of the text manager file DOCUMENT. PTM.

In Fig. 4, the text manager file DOCUMENT. PTM is configured with a header having a fixed size, which is necessarily provided, and a plurality of text management information blocks #1 to #n, each having a fixed size, which optionally can be added or deleted. Here, #1 to #n indicate block numbers.

The header includes the following information:
- the number of text management information blocks existing in the text manager file;
- the number of used text management information blocks among the existing blocks; and
- the first used block number indicating the text management information block that firstly becomes used.

Each of the text management information blocks includes the following information:
- discrimination information for used text management information blocks indicating whether or not a text management information block is used, corresponding to whether a text data file managed by the text management information exists or not;
- version information concerning a format of the text management information;
- the first character code class information on text data used in a text data file;
- the second character code class information on text data used in a text management information block;
- a file number of an object text data file;
- data source such as output mail, input mail and an address book;
- comments on a text data file;
- original file name before the conversion of a text data file into the above-described TXTxxxxx. TXT, where xxxxx denotes a file number;
- creation date of the original file name;
- reservation area for extension;
- the previous used text management information block number (if there is no previous text management information block, 0 is entered); and
- the next used text management information block number (if there is no next text management information block, 0 is entered).

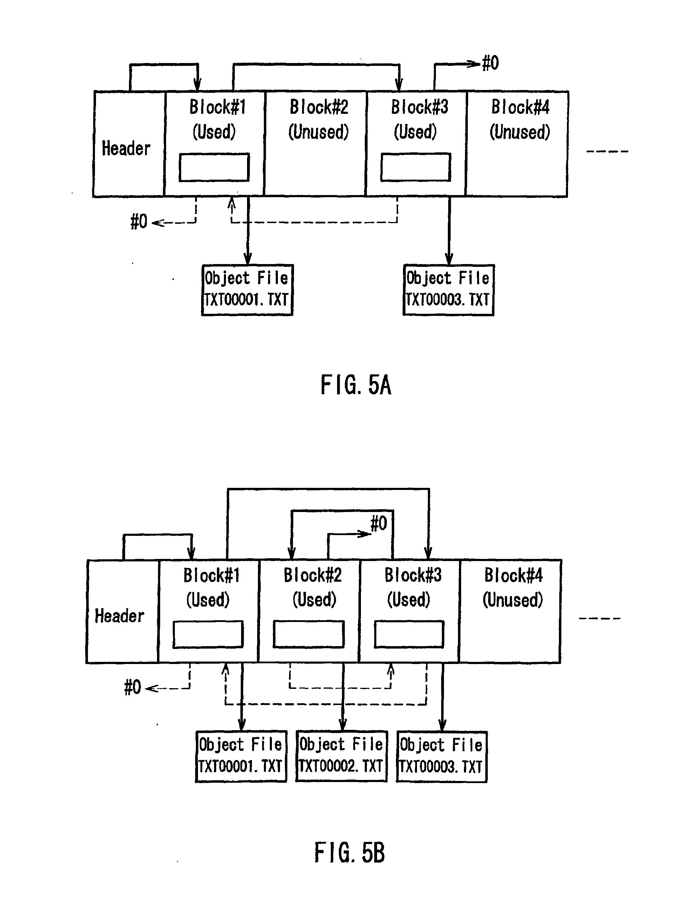

In the thus configured text manager file, text data files and their corresponding text management information can be stored efficiently by utilizing the first used block number included in the header, discrimination information for used text management information blocks, the previous used block number and the next used block number included in each of the text management information blocks #1 to #n. As an example, the following describes a case where a text data file is added, with reference to Fig. 5.

Figs. 5A and 5B respectively are schematic diagrams showing the text manager file and object text files before and after adding a text data file. In Fig. 5, the next used text management information block number in a text management information block is indicated by an arrow illustrated with a solid line, and the previous used text management information block number in the same is indicated by an arrow illustrated by a dashed line.

As shown in Fig. 5A, firstly, the header shows #1 as the first used block number. Then, by referring to #3 as the next used block number in the text management information block #1, it can be found that the text management information block #2 located between the text management information blocks #1 and #3 is not used.

Next, as shown in Fig. 5B, in the text management information block #2, the discrimination information for used text management information block is changed from "unused" to "used", and the previous used block number is set at "#3" and the next used block number is set at "#0". Subsequently, the next used block number in the text management information block #3 is changed from "#0" to "#2".

Next, 1 is added to the number of used text management information blocks in the header, and then the text data file is stored as a file name of TXT00002. TXT.

In this way, the inclusion of the previous used block number and the next used block number in each of the text management information blocks enables the construction of a file configuration having a bi-directional list configuration, so that text data files and their corresponding text management information can be stored in the memory card 124 efficiently.

In addition, the directory for multi-page image data files (RASTER) shown in Fig. 3 includes a plurality of multi-page image data files TIF00001. TIF, TIF00002. TIF, etc., and one image manager file DOCUMENT. RIM (Raster Image Manager) for managing each of the multi-page image data files. As a format of the multi-page image files, generally available TIFF (Tag Image File Format) by Adobe is used.

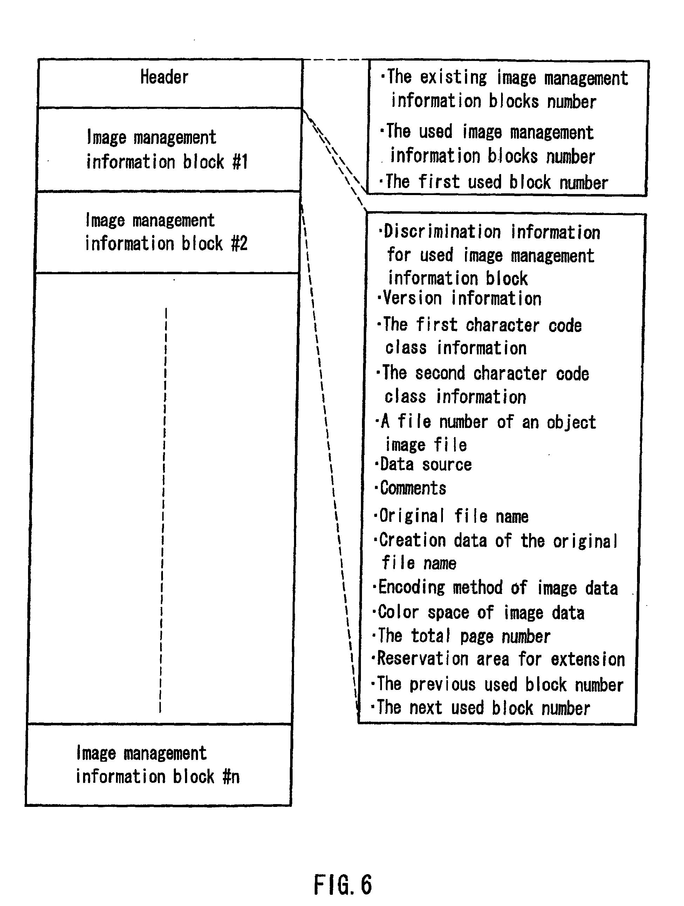

Fig. 6 shows a file configuration of the image manager file DOCUMENT. RIM.

In Fig. 6, the image manager file DOCUMENT. RIM is configured with a header having a fixed size, which is necessarily provided, and a plurality of image management information blocks #1 to #n, each having a fixed size, which optionally can be added or deleted. Here, #1 to #n indicate block numbers.

The header includes the following information:
- the number of image management information blocks existing in the image manager file;
- the number of used image management information blocks among the existing blocks; and
- the first used block number indicating the image management information block that firstly becomes used.

Each of the image management information blocks includes the following information:
- discrimination information for used image management information blocks indicating whether an image management information block is used or not, where the information corresponds to whether a multi-page image data file managed by the image management information exists or not;
- version information concerning a format of the image management information;
- the first character code class information on text data used in a multi-page image data file;
- the second character code class information on text data used in a image management information block;
- a file number of an object multi-page image data file;
- data source such as a PC, an image scanner and a facsimile;
- comments on a multi-page image data file;
- original file name before the conversion of a multi-page image data file into the above-described TXTxxxxx. TIF, where xxxxx denotes a file number;
- creation date of the original file name;
- encoding method in multi-page image data, such as JPEG, JBIG and MH (a plurality of encoding methods can be set because different encoding methods might be adopted for each page);
- color space used in multi-page image data, such as YCbCr and La*b* (a plurality of color spaces can be set because different color spaces might be adopted for each page);
- the total page number of multi-page image data;
- reservation area for extension;
- the previous used image management information block number (if there is no previous image management information block, 0 is entered); and
- the next used image management information block number (if there is no next image management information block, 0 is entered).

The image manager file also has the same bi-directional list configuration as in the text manager file and therefore has the same advantages.

In addition, the directory for job files (JOB) shown in Fig. 3 includes one job file DOCUMENT. JOB for executing a procedure such as displaying and printing with respect to a plurality of text data files and a plurality of multi-page image data files.

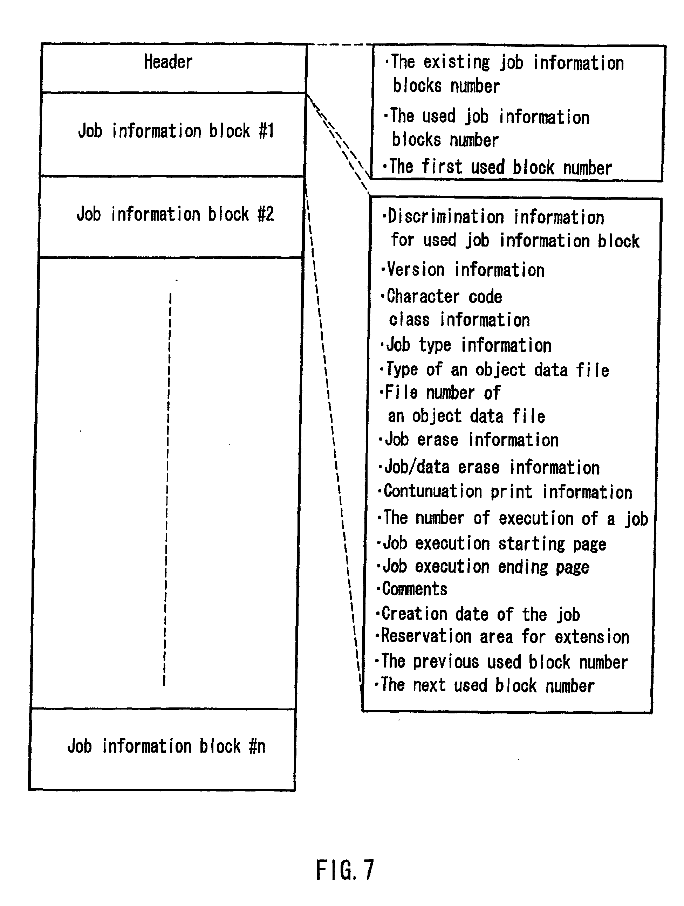

Fig. 7 shows a file configuration of the job file DOCUMENT. JOB.

In Fig. 7, the job file DOCUMENT. JOB is configured with a header having a fixed size, which is necessarily provided, and a plurality of job information blocks #1 to #n, each having a fixed size, which optionally can be added or deleted. Here, #1 to #n indicate block numbers.

The header of the job file includes the following information:
- the number of job information blocks existing in the job file;
- the number of used job information blocks among the existing blocks; and
- the first used block number indicating the job information block that firstly becomes used.

Each of the job information blocks includes the following information:
- discrimination information for used job information blocks indicating whether a job information block is used or not;
- version information concerning a format of the job information;
- character code class information on character data used in the job file;
- job type information indicating a type of job to be carried out, such as display and print;
- a type of an object data file indicating that the data file subjected to the job is a text data file or a multi-page image data file;
- a file number of a data file subjected to the job;
- job erase information indicating whether or not to erase job information after the job is carried out normally;
- job/data erase information indicating whether or not to erase both job information and an object data file after the job is carried out normally;
- continuation print information indicating, when a small amount of text data such as e-mail has been printed on a printed sheet in the previous printing job, whether or not to print a small amount of text data such as e-mail in the current print job continuously on the printed sheet;
- the number of execution of a job such as printing in plural copies;
- job execution starting page and job execution ending page, which are effective only for multi-page image data files;
- comments on a job;
- creation date of the job;
- reservation area for extension;
- the previous used job information block number (if there is no previous job information block, 0 is entered); and
- the next used job information block number (if there is no next job information block, 0 is entered).

The job file also has the same bi-directional list configuration as in the text and the image manager files, whereby especially the addition and the deletion of jobs can be conducted easily.

The following describes specific examples of writing a text or an image data file, a manager file storing management information corresponding to the data file and a job file storing job information into the memory card 124 and reading out text or image data to be subjected to a job according to the job information so as to carry out a procedure such as print and display.

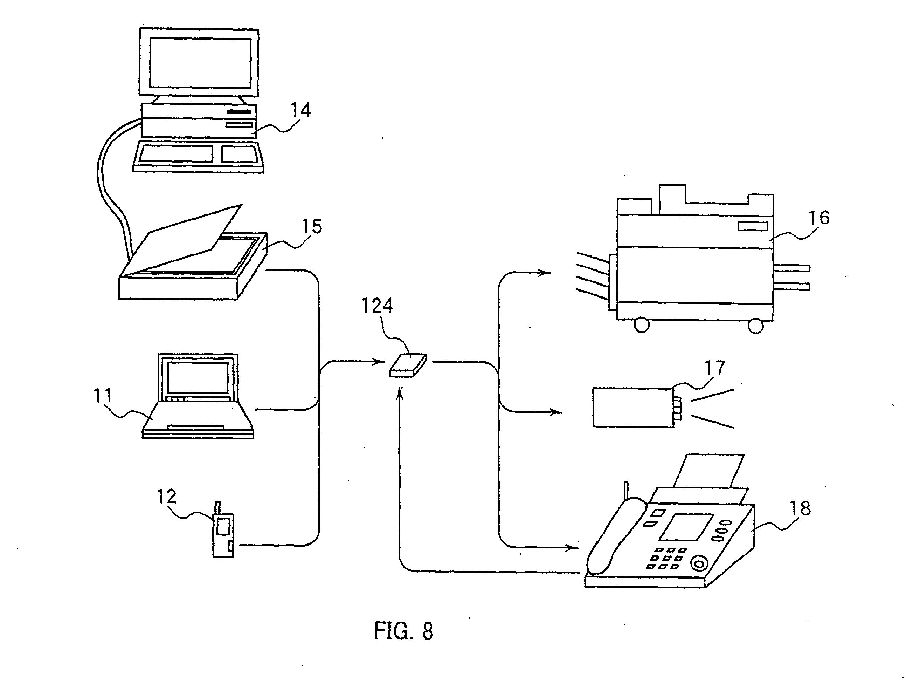

Fig. 8 shows a configuration of a system including a side equipped with a memory card writing apparatus (writer: recording apparatus) and a side equipped with a memory card reading apparatus (reader) according to this embodiment.

In Fig. 8, the memory card writer side includes a notebook PC 11 provided with a writer for creating text or image data and writing the data onto the memory card 124, a mobile phone 12 provided with a writer for writing received e-mail onto the memory card 124, and an image scanner 15 provided with a writer connected to a desktop PC 14 and for reading an original image and writing it onto the memory card 124 and the like.

The memory card read side includes a digital copying machine 16 for printing text or image data, a liquid crystal projector 17 for displaying image data and the like.

Reference numeral 18 denotes a facsimile for home use, which has both functions of writing received data onto the memory card 124 and reading out data written on the memory card 124 to print out.

### Offline printing function from the notebook PC 11

First, a function of offline-printing data using the digital copying machine 16, where the data is created by a user with the notebook PC 11, will be described in the following.

The user creates a document using application software for creating document, such as word processor or desk top publishing (DTP) software executed on the notebook PC 11.

Next, the memory card 124 is installed into a memory card slot provided in the notebook PC 11 in order to allow the created document data to be converted into image data using printer driver software for the memory card that is installed beforehand and to be written onto the memory card 124. During this procedure, as in the case of the text data described referring to Fig. 5, image management information corresponding to the image data is stored into an image manager file DOCUMENT. RIM. To this end, first, an unused image management information block (assuming it to be the block number #2) is retrieved. Then, the image management information as shown in Fig. 6 is stored in the text management information block #2 and the image data is stored as an image data file TIF00002. TIF. In this case, in the image management information block #2, for example, "00002" is set in "file number of an object image file" and a predetermined parameter indicating image data created using the PC 11 is set in "data source".

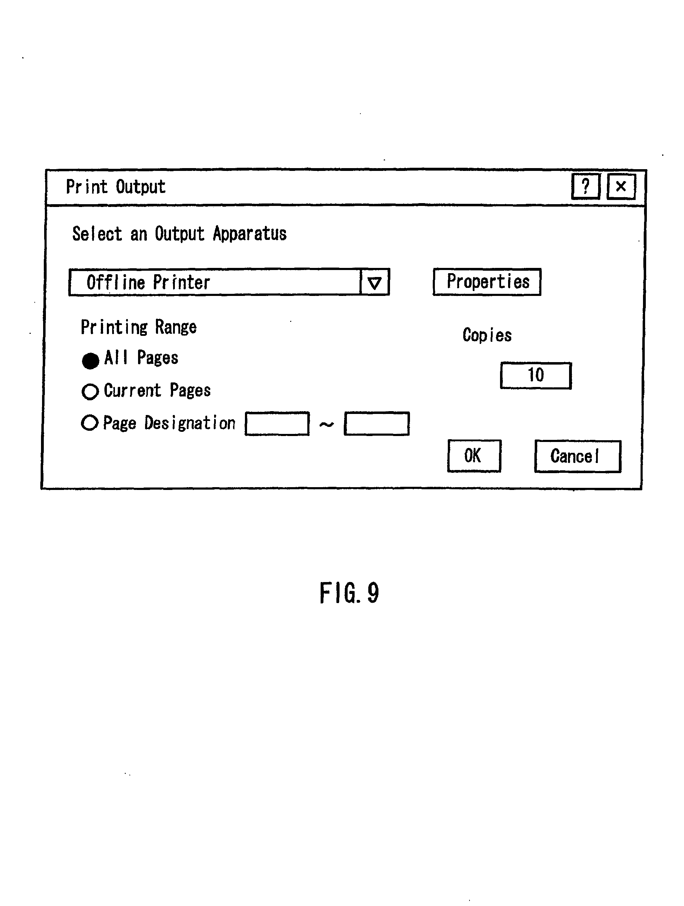

When image data created by a user is printed offline using the digital copying machine 16, first of all, as shown in Fig. 9, the user makes a user interface display a screen for selecting an output apparatus (offline printer) driver on a screen of the notebook PC 11 so as to select the offline printer on the screen. In addition, the user selects any one of "all pages", "current page" and "page destination" in the section of printing range. In the case of Fig. 9, the printing of "all pages" is selected, which is indicated by the circle-solid mark. "10" is set in the section of copies.

Next, the user selects the box of properties for the offline printer so as to display on a screen of a personal computer a dialog box for setting a print job using the digital copying machine 16.

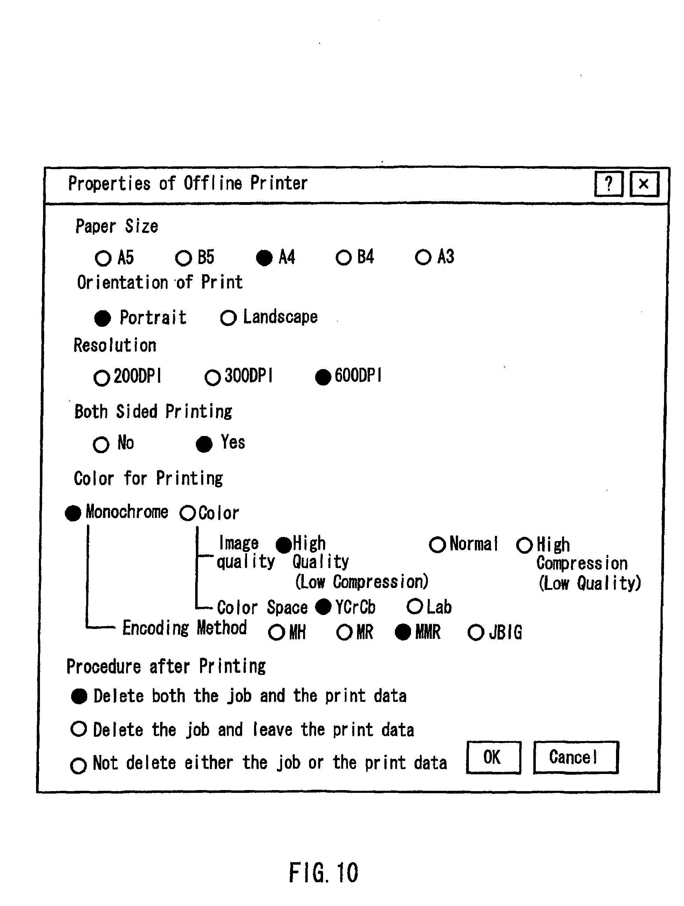

Fig. 10 shows an example of the dialog box for the offline printer. The following describes the contents to be selected in the dialog box shown in Fig. 10. In Fig. 10, items indicated by circle-solid marks are selected items for printing.
1. Paper size: selecting from "A5", "B5", "A4", "B4", and "A3":
2. Page orientation: selecting from "Portrait" and "Landscape":
3. Resolution: selecting from "200 DPI" (Dot Per Inch), "300 DPI" and "600 DPI":
4. Both sided printing: selecting from "No" and "Yes":
5. Color of Print: as for the image data, selecting from "Monochrome" and "Color". In the case of "Monochrome", an encoding method is selected from "MH", "MR", "MMR" and "JBIG". In the case of "Color", an image quality is selected from "High quality (Low compression)", "Normal" and "High compression (Low quality)", and a color space is selected from "YCbCr" and "La*b*". Note here that in the case of color, the encoding method applicable is JBIG only, and therefore there are no options for the encoding method, but quantizing tables used for JPEG encoding are changed based on the selection of the image quality:
6. Procedure after printing: selecting from "delete both the job and the print data", "delete the job and leave the print data" and "not delete either the job or the print data".

After setting each of the items in the dialog box, the user clicks an OK button with a mouse. The printer driver produces a multi-page image data file and a job file based on the settings in the dialog box and stores them into the memory card 124. Here, assuming that a new job file is created and stored in the job information block #1 shown in Fig. 7, the contents of the job file, which correspond to the settings in the dialog box shown in Fig. 10, will be described in the following.

At a header of the job file, since there is no need to add a job information block, a default value is set in "the number of existing job information blocks". Since the job information block #1 only is used, "1" is set in "the number of used job information blocks; and "1" is set in "the first used block number", corresponding to the job information block #1 of the produced job information.

Additionally, in the job information block #1, a flag "1" indicating "used" is set in "the discrimination information for used job information blocks". The version number of a format of the job information supported by the writer for this job is set in "the version information" and a character code class number such as ASCII codes and shift JIS, which is used in the job file, is set in "the character code class information".

A flag "0" indicating "print" is set in "the job type information", a flag "1" indicating "image data" is set in "the type of an object data file (in the case of text data, "0" is set), and "00002" is set in "the file number of an object data file", which corresponds to the data file name TIF00002. TIF to be subjected to the job.

Flags "0" and "1" respectively are set in "the job erase information" and in "the job/data erase information", because a selection is made to erase both the job and the print data. When "delete the job and leave the print data" is selected in the dialog box shown in Fig. 10, then flags "1" and "0" respectively are set in the "the job erase information" and in "the job/data erase information", and when "not delete either the job or the print data" is selected, flags "0" and "0" respectively are set in the "the job erase information" and in "the job/data erase information".

A flag "0" is set in "the continuation print information", because this function is not used for offline printing of the data created using the notebook PC11.

A parameter "10" is set in "the number of executions of a job", because the user inputs "10" in the box of Copies on the screen for "printing'' shown in Fig. 9. Since the user selects "all pages", "1" as the starting page and the ending page of the created multi-page image data are set in "the job execution starting page" and "the job execution ending page", respectively. In both "the previous used block number" and "the next used block number", "0" is set because this job information is firstly stored.

The user, as shown in Fig. 8, removes the memory card 124 from the user's notebook PC11 and then inserts it into the memory card slot 89 in the digital copying machine 16, where the memory card 124 holds the multi-page image data file TIF00002. TIF, the manager file in which image management information corresponding to the data file is described, and the job file in which the print job information on the object image data is described.

The CPU 85 in the digital copying machine 16 (Fig. 2) detects the insertion of the memory card 124 via the memory card controller 88 and conducts a search as to whether the job file in which the print job information is described exists in the memory card 124 or not. If the job file exists, the CPU 85 analyzes the print job information in the job file for making settings required for control circuits in the laser printer section 200 and the sorter 221. In this case, the setting is done so as to carry out "double-sided printing "of an "A4" sized sheet in "Portrait" orientation, in "10" copies, and at the resolution of "600 DPI".

The CPU 85 refers to the multi-page image data file name (TIF00002. TIF) designated by the print job information in the job file and controls to read out the multi-page image data file TIF00002. TIF from the memory card 124 to print out it.

When all of the printing output designated by the job file is completed, the CPU 85 gives the user a message for confirming whether or not to erase both the print job information and the image data file subjected to the job, which are stored in the memory card 124, based on the flags "0" and "1" in the "the job erase information" and in "the job/data erase information". Then only when the user inputs an instruction of OK to erase them, both the print job information and the image data file subjected to the job are erased.

With these configurations, especially as in the case of the notebook PC 11 equipped with the memory card writer that is not connected to external equipment through LAN or the like but is carried for use, for example, when the user wishes to create document data at a place other than his/her desk in the office and print it out immediately to prepare material for presentation to customers, the user easily can offline print the desired document data at a service shop providing the digital copying machine 16 equipped with the memory card writer, such as at a convenience store.

In addition, when the user, who does not possess a printer at home, wishes to do simple printing also, the user easily can offline print document data created using the notebook PC 11 equipped with a memory card writer, by providing or connecting a memory card reader with the facsimile for home use 18.

### Offline display function from the notebook PC 11

Next, the following describes a function of offline displaying data with the liquid crystal projector 17, where the data are created by a user with the notebook PC 11.

The user creates a document using application software for creating documents, such as word processor or desk top publishing (DTP) software executed on the notebook PC 11.

Next, the memory card 124 is installed into a memory card slot provided in the notebook PC 11 in order to allow the created document data to be converted into image data using printer driver software for the memory card that is installed beforehand and to be written onto the memory card 124. During this procedure, when color image data is created, for example, image management information corresponding to the color image data has to be stored into an image manager file DOCUMENT. RIM. To this end, first, an unused image management information block (assuming it to be the block number #2) is retrieved. Then, the image management information as shown in Fig. 6 is stored in the image management information block #2 and the color image data is stored as a multi-page image data file TIF00002. TIF. In this case, in the image management information block #2, "00002" is set in "file number of an object image file", a predetermined parameter indicating "image data" created using a PC is set in "data source", a flag indicating that all pages include image data encoded by JPEG is set in "encoding method of image data", and a flag indicating color and YCbCr is set as "color space of image data".

Next, driver software for a desired output apparatus is installed beforehand in a PC that a user will use. The following describes a case where printer driver software for an offline projector is stored as the driver software for an output apparatus.

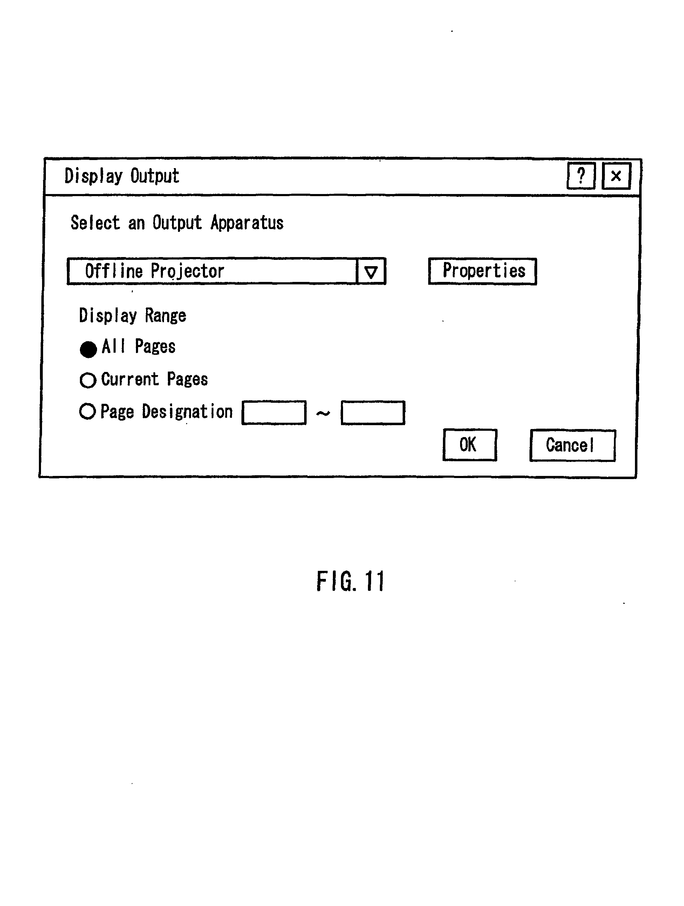

When image data created by a user is displayed offline using the liquid crystal projector 17, first of all, the user makes a user interface display a screen for selecting an output apparatus (offline projector) driver on a screen of the notebook PC 11 so as to select the offline projector on the screen, as shown in Fig. 11. In addition, the user selects any one of "all pages", "current page" and "page designation" in the section of display range. In the case of Fig. 9, the displaying of "all pages" is selected, which is indicated by the circle-solid mark.

Next, the user selects the box of properties for the offline projector so as to display on a screen of a personal computer a dialog box for setting a printing job of the liquid crystal projector 17.

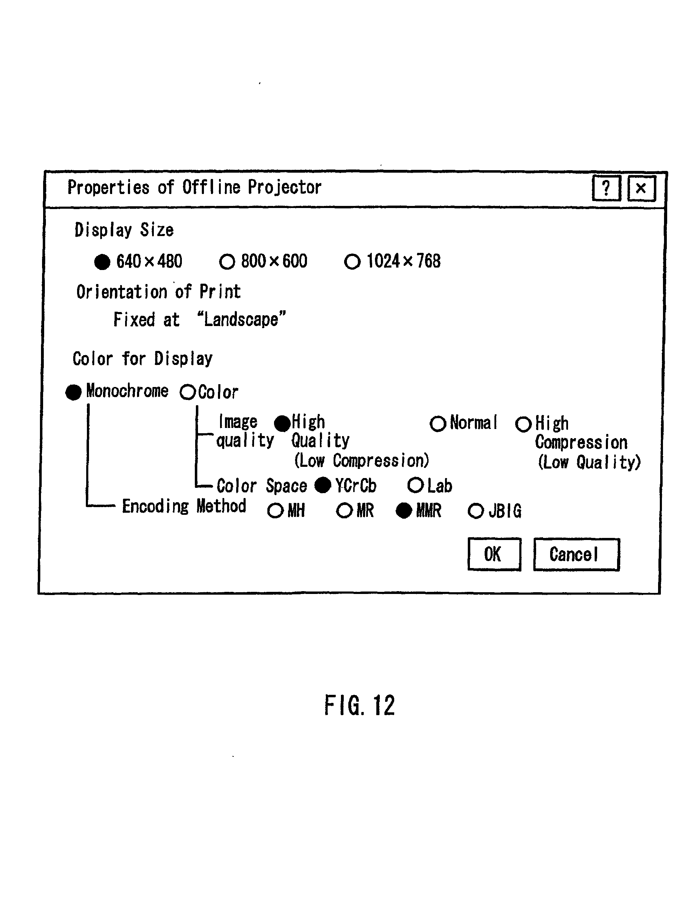

Fig. 12 shows an example of the dialog box for the offline projector. The following describes the contents to be selected in the dialog box shown in Fig. 12. In Fig. 12, items indicated by circle-solid marks are selected contents for display.
1. Display size: selecting from "640× 480", "800×600" and "1024×768", each of which indicates the number of pixels along horizontal direction × the number of scanning lines along vertical direction;
2. Page orientation: fixed at "landscape";
3. Color of print: as for the image data, selecting from "Monochrome" and "Color". In the case of "monochrome", an encoding method is selected from "MH", "MR", "MMR" and "JBIG". In the case of "color", an image quality is selected from "High quality (Low compression)", "Normal" and "High compression (Low quality)", and a color space is selected from "YCbCr" and "La*b*".

After setting each of the items in the dialog box, the user clicks an OK button with a mouse. The printer driver produces a multi-page image data file and a job file based on the settings in the dialog box and stores them in the memory card 124. Here, assuming that a new job file is created and stored in the job information block #1 shown in Fig. 7, the contents of the job file, which correspond to the settings in the dialog box shown in Fig. 12, will be described in the following.

At a header of the job file, since there is no need to add a job information block, a default value is set in "the number of existing job information blocks". Since the job information block #1 only is used, "1" is set in "the number of used job information blocks; and "1" is set in "the first used block number", corresponding to the job information block #1 in the produced job information.

Additionally, in the job information block #1, a flag "1" indicating "used" is set in "the discrimination information for used job information blocks". The version number of the format of the job information supported by the writer for this job is set in "the version information" and a character code class number such as ASCII codes and shift JIS, which is used in the job file, is set in "the character code class information"

A flag "1" indicating "display" is set in "the job type information", a flag "1" indicating "image data" is set in "the type of an object data file", and "00002" is set in "the file number of an object data file", which corresponds to the data file name TIF00002. TIF to be subjected to the job.

In both "the previous used block number" and "the next used block number", "0" is set because this job information is firstly stored.

The user, as shown in Fig. 8, removes the memory card 124 from the user's notebook PC11 and then inserts it into the memory card slot in the liquid crystal projector 17, where the memory card 124 holds the multi-page image data file TIF00002. TIF, the manager file in which image management information corresponding to the data file is described, and the job file in which the display job information on the object image data is described.

The CPU (not shown) in the liquid crystal projector 17 detects the insertion of the memory card 124 via the memory card controller and conducts a search as to whether the job file in which the display job information is described exists in the memory card 124 or not. If the job file exits, the CPU analyzes the display job information in the job file for making required settings. In this case, the setting is done so as to display in the size of "the number of pixels along horizontal direction 640× the number of scanning line along vertical direction 480".

The CPU in the liquid crystal projector refers to the multi-page image data file name (TIF00002. TIF) designated by the display job information in the job file and reads out the multi-page image data file TIF00002. TIF from the memory card 124 to display it.

With this configuration, when the user wishes to use document data created with the notebook PC 11 equipped with the memory card writer as material for presentation to customers or at the meeting in the company, the user easily can offline display the desired document data without using the personal computer but by preparing the liquid crystal projector 17 equipped with the memory card reader at the site.

Note here that although the above-description refers to offline print and offline display using the notebook PC as typical examples, image data read using the image scanner 15 equipped with a memory card writer at the office can be written onto the memory card 124 as shown in Fig. 8, and the image data can be offline displayed with the liquid crystal display 17 equipped with the memory card reader when making a presentation at a meeting.

In addition, image data read using a hand scanner connected to the facsimile 18 for home use equipped with the memory card writer can be written onto the memory card at home, and the image data can be captured into the notebook PC 11 equipped with the memory card reader.

The above-description deals with an example of offline printing or offline displaying image data. Meanwhile, examples of offline printing text data include offline printing of e-mail received by the mobile phone 12 equipped with a memory card writer. In this case, the mobile phone stores e-mail to be printed as a text file in the memory card and then updates DOCUMENT. PTM (Plain Text Manager) and job information. In this procedure, since the received e-mail contains small amount of data, the user may wish to offline print a plurality pieces of e-mail data continuously on the same sheet. To this end, "continuation print information" is used as the job information shown in Fig. 7, where a flag "1"should be set. When the memory card in which the text data and the job information for printing the text data are stored is installed into the printer, then the printer prints the text data on a sheet using font data stored in the printer.

In addition, document data created using the PC is converted into multi-page image data using a printer driver, and the converted data is transmitted to the mobile phone 12 equipped with the memory card writer as an attached file by e-mail. Then, the mobile phone stores the attached file in the memory card 124. This readily enables offline printing using a facsimile for home use and digital copying machines, which are equipped with a memory card reader, provided at the office and a service shop.

While the memory card 124 is used as a removable storage medium in this embodiment, similar effects can be obtained using a floppy disk, an optical disk, a removable hard disk, etc.

Also, while a monochrome digital copying machine is described in this embodiment, the same is true for a color copying machine. In this case, it is preferable that the image processor 73 includes means for setting a color correction factor in accordance with color space for each page of the multi-page image data.

As described above, the present invention can realize a portable storage medium and a recording apparatus for the same that are readily applicable to a digital copying machine, a scanner, a printer, a facsimile, a mobile phone, a liquid crystal projector, a television set and the like and for carrying out offline inputting or outputting of image and text data automatically and efficiently by recording the image and text data together with management information and job information having a bi-directional list structure onto a removable and portable storage medium.

## Claims

1. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks, each of which is specified to have a fixed size, for storing the plurality of job information, and each of the plurality of job information blocks includes discrimination information for used job information blocks to indicate whether the job information block is used or not.

2. The portable storage medium according to claim 1, wherein each of the plurality of job information blocks includes pointer information on a next used job information block and pointer information on a previous used job information block.

3. The portable storage medium according to claim 1, wherein the job file comprises a header, the header at least including: the number of the job information blocks that exist in the job file; the number of the job information blocks that are used or unused; and pointer information on a firstly used job information block.

4. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes job erase information that indicates whether or not to delete the job information after a predetermined procedure with respect to the data file as an object of the job information has been executed normally.

5. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes job/data erase information that indicates, after a predetermined procedure with respect to the data file as an object of the job information has been executed normally, whether or not to delete both the job information and the data file as the object of the job information.

6. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes version information concerning a format of the job information.

7. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes a file number of the data file as an object of the job information.

8. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes character code class information on text data that is used in the job information block.

9. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes job type information that indicates a job type of at least display and print.

10. A portable storage medium in which a plurality of data files and one job file are stored, where a plurality of job information for executing each of predetermined procedures with respect to each of a designated plurality of data files from the plurality of data files are integrated to the job file,
wherein the job file comprises a plurality of job information blocks for storing the plurality of job information, and each of the plurality of job information blocks includes continuation print information that indicates whether or not to print data as an object of a current print job, which is designated by job type information, continuously on a printed sheet on which data as an object of a previous print job, which is designated by job type information, has been printed.

11. The portable storage medium according to claim 10, wherein the data as the object of the print job is text data.

12. A portable storage medium in which a plurality of data files and one job file are stored, where a plurality of job information for executing each of predetermined procedures with respect to each of a designated plurality of data files from the plurality of data files are integrated to the job file, comprising a plurality of directories in which a plurality of data files that are different in type are classified according to their data file types and stored.

13. The portable storage medium according to claim 12, wherein the data files are files containing printable data.

14. The portable storage medium according to claim 12, wherein the data files contain at least two types of image data and text data.

15. A portable storage medium in which a plurality of data files and one manager file are stored, where a plurality of management information corresponding to each of the plurality of data files are integrated to the manager file,
wherein
the plurality of data files at least comprise a plurality of image data files and a plurality of text data files, and the plurality of management information comprise: a plurality of image management information, each of which corresponds to each of the plurality of image data files; and a plurality of text management information, each of which corresponds to each of the plurality of text data files, and
the manager file comprises: an image manager file in which the plurality of image management information are integrated as one file and stored; and a text manager file in which the plurality of text management information are integrated as one file and stored.

16. A portable storage medium in which a plurality of data files and one manager file are stored, where a plurality of management information corresponding to each of the plurality of data files are integrated to the manager file, wherein the manager file comprises a plurality of management information blocks, each of which is specified to have a fixed size, for storing the plurality of management information that correspond to each of the plurality of data files, and each of the plurality of management information blocks includes discrimination information for used management information blocks to indicate whether the management information block is used or not, which corresponds to whether a region for storing a data file as an object of management is used or not.

17. The portable storage medium according to claim 16,
wherein
the plurality of data files at least comprise a plurality of image data files and a plurality of text data files, and the plurality of management information comprise: a plurality of image management information, each of which corresponds to each of the plurality of image data files; and a plurality of text management information, each of which corresponds to each of the plurality of text data files, and
the manager file comprises: an image manager file in which the plurality of image management information are integrated as one file and stored; and a text manager file in which the plurality of text management information are integrated as one file and stored.

18. The portable storage medium according to claim 16, wherein each of the plurality of management information blocks comprises pointer information on a next used management information block and pointer information on a previous used management information block.

19. The portable storage medium according to claim 16, wherein the manager file comprises a header, the header at least including: the number of the management information blocks that exist in the manager file; the number of the management information blocks that are used or unused; and pointer information on a firstly used management information block.

20. A portable storage medium in which a plurality of data files and one manager file are stored, where a plurality of management information corresponding to each of the plurality of data files are integrated to the manager file, wherein the manager file comprises a plurality of management information blocks for storing the plurality of management information that correspond to each of the plurality of data files, and each of the plurality of management information blocks includes version information on a format of the management information.

21. A portable storage medium in which a plurality of data files and one manager file are stored, where a plurality of management information corresponding to each of the plurality of data files are integrated to the manager file, wherein the manager file comprises a plurality of management information blocks for storing the plurality of management information that correspond to each of the plurality of data files, and each of the plurality of management information blocks includes a file number of the data file as an object of the management information.

22. A portable storage medium in which a plurality of data files and one manager file are stored, where a plurality of management information corresponding to each of the plurality of data files are integrated to the manager file, wherein the manager file comprises a plurality of management information blocks for storing the plurality of management information that correspond to each of the plurality of data files, and each of the plurality of management information blocks includes a first character code class information on text data used in the data files and a second character code class information on text data used in the management information.

23. A portable storage medium in which a plurality of data files and one manager file are stored, where a plurality of management information corresponding to each of the plurality of data files are integrated to the manager file,
wherein the data files are multi-page image data files, and the manager file comprises a plurality of image management information blocks for storing the plurality of image management information that correspond to each of the plurality of image data files, and each of the plurality of image management information blocks includes discrimination information for encoding method indicating encoding methods for all image data, which are used in the multi-page image data file as an object of the management information.

24. A portable storage medium in which a plurality of data files and one manager file are stored, where a plurality of management information corresponding to each of the plurality of data files are integrated to the manager file,
wherein the data files are multi-page image data files, and the manager file comprises a plurality of image management information blocks for storing the plurality of image management information that correspond to each of the plurality of image data files, and each of the plurality of image management information blocks includes discrimination information for color space indicating color spaces for all image data, which are used in the multi-page image data file as an object of the management information.

25. The portable storage medium according to any one of claims 1 to 24,
wherein the portable storage medium is a memory card.

26. A recording apparatus for a portable storage medium, comprising means for recording the data files and the corresponding job information on the portable storage medium according to any one of claims 1 to 10 and 25.

27. Arecording apparatus for a portable storage medium, comprising means for recording the data files and the corresponding management information on the portable storage medium according to any one of claims 11 to 25.
